# EUROPEAN PATENT APPLICATION

(11) **EP 4 722 919 A2**
(43) Date of publication of application: **08.04.2026**
(21) Application number: 25205854.0
(22) Date of filing: 30.09.2025
(51) Int. Cl.: G06F 11/07, G06F 11/30, G06F 21/55, G06N 20/00

(54) **SYSTEM AND METHOD FOR SELECTIVE DISENGAGEMENT OF ARTIFICIAL INTELLIGENCE EXECUTION AND OPERATIONS**

(30) Priority: 01.10.2024 US 202463701691 P
(71) Applicant: Cognizant Technology Solutions U.S. Corporation, College Station, TX 77845 (US)
(72) Inventor: Kukreja, Abhaykumar K, Naperville, IL, 60564 (US)
(74) Representative: Boult Wade Tennant LLP

(57) **Abstract**

An AI operation disengagement engine (104), communicatively coupled to an AI system (100), for selective disengagement of one or more AI execution and operations is provided. Parameter value corresponding to predefined parameters indicative of predetermined failure states associated with AI execution and operations of AI component subsystems (102) of the AI system (100) are monitored and compared with a corresponding predetermined threshold range. A notification is generated when parameter value deviates beyond corresponding predetermined threshold range. It is determined if a disengagement process is to be initiated based on a disengagement level and a risk analysis associated with the AI component subsystems (102) to generate a disengagement data. A disengagement signal is transmitted to an AI disengagement unit (222) based on disengagement data and disengagement command, triggered in response to generated notification, to selectively disengage the AI execution and operations of the AI component subsystems (102).

## Description

### Field of the invention

The present invention relates generally to the field of crisis management and risk mitigation of Artificial Intelligence (AI) systems. More particularly, the present invention relates to a system and a method for selective disengagement of one or more AI execution and operations of the AI system to minimize disruption and to support safe deployment of the AI systems.

### Background of the invention

In today's world, AI is being rapidly adopted by various organizations and deployed across diverse sectors with an aim to enhance productivity, operational efficiency, decision-making, and innovation. With advancement in technology, developers are building higher degrees of autonomy into AI systems thereby enabling such systems to make and implement decisions with minimal human intervention. However, such autonomous AI systems are often accompanied by significant risks and challenges, such as unintended model outputs, malicious attacks, ethical dilemmas, and legal liabilities. Moreover, as global regulatory framework is shaping around the responsible use of AI, organizations are presented with a pressing need for robust systems to manage AI risks operationally.

Typically, when an AI system malfunctions or exhibits undesirable behavior, it is often difficult to promptly identify a root cause of an issue or intervene effectively. The malfunction of the AI system can result from model drift, adversarial attacks, data poisoning, or unforeseen interactions with other systems. Usually, in large-scale enterprise environments where multiple AI components operate simultaneously, the complexity and interconnectedness of AI systems make it increasingly difficult to identify an exact source of malfunction or risk. In the absence of precise intervention mechanisms, operators are compelled to shut down an entire AI system or even broader segments of Information Technology (IT) infrastructure including servers, applications, or network segments, as a precautionary measure. While such an approach is potentially effective in halting immediate risk, it can cause substantial inconvenience to end-users and disruption to business operations. Moreover, shutting down entire systems not only disrupts legitimate user activity but also obscures the root cause of the problem which results in complicating post-incident analysis, technical operations and regulatory reporting. Many existing AI systems lack a dedicated emergency cut-off mechanism that allows for targeted disengagement of problematic AI components. The absence of such control mechanisms in the AI systems can lead to unnecessary downtime and loss of productivity. Further, operational costs also increase due to a requirement for considerable resources in diagnosing and restoring affected services.

In the light of the aforementioned drawbacks, there is a need for a system or a method that can prevent potential misuse or unintended consequences arising from uncontrolled behavior of autonomous AI systems. There is a need for a system and a method that provides for targeted disengagement of the AI system components. There is a need for a system and a method that manages AI-related crises and addresses security vulnerabilities by containing risk associated with the autonomous AI systems.

### Summary of the invention

In various embodiments of the present invention, an AI operation disengagement engine for selective disengagement of one or more AI execution and operations of an AI system is provided. The AI operation disengagement engine is communicatively coupled to the one or more AI component subsystems and is executed by a processor of the AI system that executes program instructions stored in a memory of the AI system. The AI operation disengagement engine comprises an operation monitoring unit, a functional resilience unit, and an AI disengagement unit. The operation monitoring unit is configured to monitor a parameter value corresponding to each of one or more predefined parameters. The one or more predefined parameters are indicative of predetermined failure states associated with the one or more AI execution and operations of one or more AI component subsystems in the AI system. Further, the operation monitoring unit is configured to compare the parameter value with a corresponding predetermined threshold range associated with each of the one or more predefined parameters. The operation monitoring unit is also configured to report one or more of a deviation in the monitored parameter value beyond the corresponding predetermined threshold range, an event data, and an event log associated with the one or more AI execution and operations to the functional resilience unit. The functional resilience unit is communicatively connected to the operation monitoring unit. The functional resilience unit is configured to generate a notification when the parameter value deviates beyond the corresponding predetermined threshold range. Further, the functional resilience unit determines if a disengagement process is to be initiated based on one or more of a disengagement level and a risk analysis associated with the one or more AI component subsystems obtained based on an analysis of an input received from an input-output unit, the deviation in the monitored parameter value, the event data and the event log to generate disengagement data. The functional resilience unit transmits a disengagement signal to the AI disengagement unit, communicatively connected to the functional resilience unit, based on the disengagement data and a disengagement command triggered in response to the generated notification. The AI disengagement unit is configured to selectively disengage impacted one or more AI execution and operations based on the disengagement signal. The selective disengagement includes fully or partially disabling the impacted one or more AI execution and operations of the one or more AI component subsystems.

In various embodiments of the present invention, a method for selective disengagement of one or more AI execution and operations of an AI system executed by an AI operation disengagement engine communicatively coupled to one or more AI component subsystems of the AI system is provided. The method is implemented by a processor of the AI system that executes program instructions stored in a memory of the AI system. The method comprises monitoring a parameter value corresponding to one or more predefined parameters. The one or more predefined parameters are indicative of predetermined failure states associated with the one or more AI execution and operations of the one or more AI component subsystems in the AI system. The method further comprises comparing the parameter value with a corresponding predetermined threshold range associated with each of the one or more predefined parameters. The method also comprises generating a notification when the parameter value deviates beyond the corresponding predetermined threshold range. The method further comprises determining if a disengagement process is to be initiated based on one or more of a disengagement level and a risk analysis associated with the one or more AI component subsystems obtained based on an analysis of an input received from an input-output unit, the deviation in the monitored parameter value, the event data and the event log, to generate a disengagement data. The method also comprises triggering a disengagement signal based on the disengagement data and a disengagement command triggered in response to the generated notification. The method further comprises selectively disengaging impacted one or more AI execution and operations of the one or more AI component subsystems based on the disengagement signal. The selective disengagement includes fully or partially disabling the impacted one or more AI operations of the one or more AI component subsystems.

### Brief description of the accompanying drawings

The present invention is described by way of embodiments illustrated in the accompanying drawings wherein:
FIG. 1 is a detailed block diagram of an AI operation disengagement engine, communicatively coupled with an AI system, for selective disengagement of one or more AI execution and operations of one or more AI component subsystems of the AI system, in accordance with various embodiments of the present invention;
Fig. 2 is a detailed block diagram of the AI operation disengagement engine of one or more AI component subsystems of the AI system, in accordance with an embodiment of the present invention;
Figs.3 to 6 illustrate signal flow diagrams depicting interactions between one or more AI components subsystems of the AI system, an input-output unit, and an interface unit, in accordance with various embodiments of the present invention;
Figs. 7 and 7A illustrate a flowchart depicting a method for selective disengagement of the one or more AI execution and operations of the AI system, in accordance with various embodiments of the present invention; and
FIG. 8 illustrates an exemplary computer system in which various embodiments of the present invention may be implemented.

### Detailed description of the invention

The present invention discloses a system and a method for selective disengagement of one or more AI execution and operations of one or more AI components of an AI system, in accordance with various embodiments of the present invention. The present invention provides for an AI operation disengagement engine which is embedded in corresponding one or more AI component subsystems of an AI system or operatively or communicatively coupled to the corresponding one or more AI component subsystems. The AI operation disengagement engine selectively disengages one or more AI operations of the AI component subsystems without necessitating a complete shutdown of the entire AI system. Additionally, the present invention provides for enhanced organizational resilience and risk management by enabling targeted intervention in response to operational anomalies, security incidents, or regulatory requirements, while also maintaining traceability and accountability of the AI system.

The disclosure is provided in order to enable a person having ordinary skill in the art to practice the invention. Exemplary embodiments herein are provided only for illustrative purposes and various modifications will be readily apparent to a person skilled in the art. The general principles defined herein may be applied to other embodiments and applications without departing from the scope of the invention. The terminology and phraseology used herein is for the purpose of describing exemplary embodiments and should not be considered limiting. Thus, the present invention is to be accorded with the widest scope encompassing numerous alternatives, modifications, and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

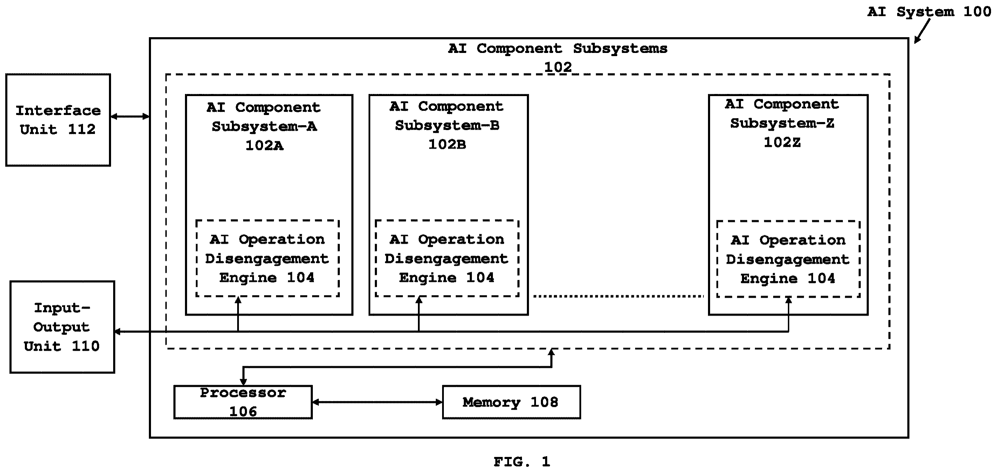

FIG. 1 is a detailed block diagram of an AI system 100 operatively or communicatively coupled with an AI operation disengagement engine 104 for selective disengagement of one or more AI execution and operations of corresponding AI component subsystems of the AI system 100, in accordance with various embodiments of the present invention. Multiple AI systems 100 can be implemented based on the configurations illustrated in FIG.1. Referring to FIG. 1, in an embodiment of the present invention, the AI system 100 comprises one or more AI component subsystems 102. The one or more AI component subsystems 102 include, but are not limited to, an AI component subsystem-A 102A, an AI component subsystem-B 102B, or any additional AI component subsystems 102C, 102D,........., 102Z, as required by specific implementation of the AI system 100. It will be appreciated by those skilled in the art that any number of AI component subsystems may be employed without departing from the scope of the present disclosure. Each of the one or more AI component subsystems is configured to execute one or more AI-driven functions, or processes including, but is not limited to, natural language processing, computer vision, decision-making, predictive analytics, autonomous control, or any other machine learning-based operations. In an exemplary embodiment, the one or more AI component subsystems are implemented as discrete integrated hardware-software modules or as distributed entities across multiple computing environments.

In an embodiment of the present invention, each of the one or more AI component subsystems 102 comprises an AI operation disengagement engine 104. The AI operation disengagement engine 104 is operatively and communicatively coupled to one or more of the AI component subsystems 102 to selectively disengage the one or more AI operations executed by the one or more AI component subsystems 102. An input-output unit 110 is connected to the AI operation disengagement engine 104 via a communication channel (not shown). The communication channel (not shown) may include, but is not limited to, a physical transmission medium, such as, a wire, or a logical connection over a multiplexed medium, such as, a radio channel in telecommunications and computer networking. Examples of radio channel in telecommunications and computer networking may include, but are not limited to, a local area network (LAN), a metropolitan area network (MAN) and a wide area network (WAN).

In an embodiment of the present invention, the input-output unit 110 is configured to serve as a primary interface for a system administrator, IT support teams, or developers to interact, command, or override an ongoing operation of the AI system 100 during a normal or an adverse operational scenario. The input-output unit 110 receives various inputs such as, a Standard Operating Procedure (SOP) and a plurality of predetermined failure states associated with the one or more AI component subsystems 102 of the AI system 100.

In another embodiment of the present invention, the input-output unit 110 displays status information or real-time updates on an operational state of the one or more AI component subsystems 102 received from the AI operation disengagement engine 104. The input-output unit 110 displays immediate warning messages related to detected anomalies, alerts, and notifications related to disengagement of the one or more AI operations associated with the one or more AI component subsystems 102 which are received from the AI operation disengagement engine 104. The input-output unit 110 further displays recommendations received from the AI operation disengagement engine 104 for remedial actions based on an assessment of disengagement of the one or more AI operations associated with the one or more AI component subsystems 102. In an exemplary embodiment of the present invention, the input-output unit 110 is also configured for network communication thereby enabling remote access, monitoring, and control of the AI system 100. The input-output unit 110 being operatively connected with the AI system 100 ensures that the AI system 100 remains under human supervision even as the AI system 100 operates autonomously.

In operation, in an embodiment of the present invention, the AI operation disengagement engine 104 is triggered based on one or more pre-defined disengagement scenarios specified within the SOP related to one or more of the AI component subsystems 102 of the AI system 100, which is received as an input via the input-output unit 110. The SOP is a documented protocol that outlines underlying rules and configurations of the one or more of the AI component subsystems 102 and is specific to each of the AI component subsystems 102. The one or more pre-defined disengagement scenarios specified within the SOP include, but are not limited to, detection of erroneous decision-making, violation of predefined ethical or safety rules, breach of regulatory compliance requirements, or system overload. In another embodiment, the AI operation disengagement engine 104 is triggered upon receiving a disengagement command as the input from the input-output unit 110. In yet another embodiment of the present invention, the AI operation disengagement engine 104 is triggered upon receiving the plurality of predetermined failure states associated with any or all of the AI component subsystems 102 as an input from the input-output unit 110.

In another embodiment of the present invention, an interface unit 112 is communicatively coupled to the AI system 100. The interface unit 112 is implemented in a User Equipment (UE) via an application installed in the UE and runs on an Operating System (OS) of the UE that generally defines a first active user environment. The OS typically presents or displays the application through the Graphical User Interface (GUI) of the OS. In a non-limiting example, the UE may be a laptop computer, a desktop computer, a personal computer, a notebook, a smartphone, a tablet, a smartwatch, or any device capable of capturing, retrieving, sending, receiving, and displaying electronic data. Any user can interact with the interface unit 112 to access the AI system 100. The GUI may be implemented as a web-based dashboard ("dashboard") thereby providing the users with access to a comprehensive suite of features. In various embodiments of the present invention, the interface unit 112 is configured to receive queries from the users and facilitate an interaction with the AI system 100.

In an embodiment of the present invention, the AI operation disengagement engine 104 is executed via a processor 106 and a memory 108 of the AI system 100. The processor 106 is specifically programmed to execute instructions stored in the memory 108 for executing functionalities associated with the AI operation disengagement engine 104, in accordance with various embodiments of the present invention. The processor 106 is configured to receive the inputs from both the input-output unit 110 and the interface unit 112 and execute functionalities of the AI operation disengagement engine 104.

In an embodiment of the present invention, the processor 106 is configured to execute the AI operation disengagement engine 104 to identify faulty AI operation of one or more of the AI component subsystems 102 and selectively disengaging the identified one or more AI operations of the one or more AI component subsystems 102. The selective disengagement of the one or more AI operations may be temporary or permanent depending on an extent of severity of detected issue, operational risk, or failure state. The AI operation disengagement engine 104 includes a plurality of units and sub-units (explained in later paragraphs) which work in conjunction with each other for carrying out the functionalities associated with disengaging the one or more AI component subsystems 102. The plurality of units and sub-units of the AI operation disengagement engine 104 are operated via the processor 106 specifically programmed to execute instructions stored in the memory 108 for executing respective functionalities of the units and the sub-units of the AI operation disengagement engine 104 in accordance with various embodiments of the present invention.

In another embodiment of the present invention, the AI system 100 may be implemented in a cloud computing architecture in which data, applications, services, and other resources are stored and delivered through shared datacenters. In an exemplary embodiment of the present invention, the functionalities of the AI system 102 are delivered to a user as Software as a Service (SaaS) or a Platform as a Service (PaaS) over a communication network.

In yet another embodiment of the present invention, the AI system 100 may be implemented as a client-server architecture. In this embodiment of the present invention, a client terminal accesses a server hosting the one or more AI component subsystems 102 over a communication network. The client terminals may include but are not limited to a computer, a tablet, or any other wired or wireless terminal. The server may be a centralized or a decentralized server.

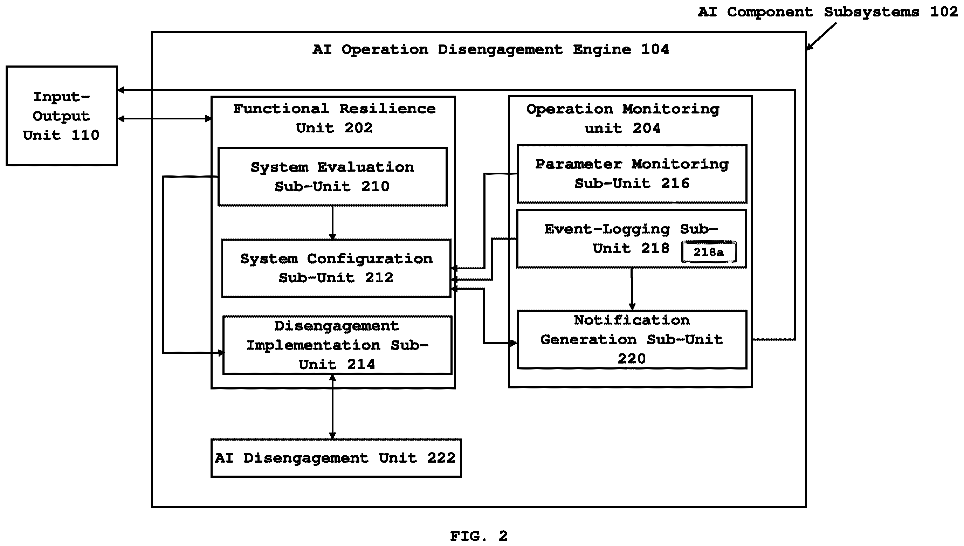

The operation of the AI operation disengagement engine 104 has been explained in detail with respect to FIG. 2. Fig. 2 is a detailed block diagram of the AI operation disengagement engine 104 communicatively coupled to the one or more AI component subsystems 102 of the AI system 100, in accordance with various embodiments of the present invention.

In various embodiments of present invention, the AI operation disengagement engine 104 is configured to monitor, evaluate, and control the one or more AI operations of the one or more AI component subsystems 102 and selectively disengage the one or more AI operations when the one or more pre-defined disengagement scenarios are identified by the AI operation disengagement engine 104. In an embodiment of the present invention, the AI operation disengagement engine 104 comprises a functional resilience unit 202 and an operation monitoring unit 204. The functional resilience unit 202 and the operation monitoring unit 204 are in communication with each other. Each of the functional resilience unit 202 and an operation monitoring unit 204 comprise a plurality of sub-units. The functional resilience unit 202 comprises a system evaluation sub-unit 210, a system configuration sub-unit 212, and a disengagement implementation sub-unit 214. The system evaluation sub-unit 210, the system configuration sub-unit 212, and the disengagement implementation sub-unit 214 are in communication with each other. In an exemplary embodiment, all units and sub-units mentioned above are interconnected through a combination of software interfaces, data buses, and internal messaging protocols to ensure that information flows seamlessly between various components of the AI operation disengagement engine 104.

In an embodiment of the present invention, the functional resilience unit 202 is configured to ensure that the one or more AI component subsystems 102 operate within predetermined safety, compliance, and performance threshold range. The functional resilience unit 202 enables adaptive resilience of the one or more AI component subsystems 102 by evaluating associated risks, analyzing configuration of the one or more AI component subsystems 102 and executing fallback strategies to maintain functionality and minimizes disruption while disengaging the one or more AI operations via the system evaluation sub-unit 210, the system configuration sub-unit 212, and the disengagement implementation sub-unit 214 respectively. The functional resilience unit 202 is configured to receive the SOP related to the AI component subsystems 102 from the input-output unit 110 and enables the selective disengagement of the one or more AI operations based on the one or more pre-defined disengagement scenarios.

In an embodiment of the present invention, the operation monitoring unit 204 is operably coupled to the system configuration sub-unit 212 of the functional resilience unit 202. The operation monitoring unit 204 is configured to monitor one or more predefined parameters, corresponding to a predetermined threshold range of each of the one or more predefined parameters, which are indicative of a pre-determined failure state, the one or more AI operations of the one or more AI component subsystem 102, alerts, recommendations, and notifications indicating the operational state of the one or more AI component subsystems 102. The one or more predefined parameters and the corresponding predetermined threshold range are specified in the SOP and the system configuration unit 204 is configured to extract the one or more predefined parameters and the corresponding predetermined threshold range to monitor and alert any adverse operational scenario.

In an embodiment of the present invention, the operation monitoring unit 204 ensures that real-time monitoring data are sent to the system configuration sub-unit 212 for initiating a disengagement process of the one or more AI operations of the one or more AI component subsystems 102. The operation monitoring unit 204 comprises a parameter monitoring sub-unit 216, an event-logging sub-unit 218, and a notification generation sub-unit 220. The parameter monitoring sub-unit 216. The event-logging sub-unit 218 and the notification generation sub-unit 220 are in communication with each other. In an exemplary embodiment of the present invention, all the units and sub-units mentioned above are interconnected through a combination of software interfaces, data buses, and internal messaging protocols to ensure that information flows seamlessly between various components of the AI operation disengagement engine 104.

In an embodiment of present invention, the system evaluation sub-unit 210 receives the input from the input-output unit 110. The system evaluation sub-unit 210 is configured to understand natural language by using advanced Natural Language Processing (NLP) techniques. The input includes the SOP that provides details such as a risk level associated with the one or more AI component subsystems 102 implemented within the AI system 100; predetermined failure states within the one or more AI component subsystems 102; and the one or more predefined parameters and the corresponding predetermined threshold range, which are indicative of the predetermined failure states, for activating the AI operation disengagement engine 104.

In an exemplary embodiment of present invention, the system evaluation sub-unit 210 assesses a risk level associated with the AI system 100, such as a minimal risk AI system, a limited risk AI system, a high-risk AI system, or an unacceptable risk AI system based on an analysis of the received input. Further, the system evaluation sub-unit 210 assesses a plurality of profiling features associated with the one or more AI component subsystems 102 based on an analysis of the received input. The plurality of profiling features includes risk profile, an industry profile and a materiality profile of the one or more AI component subsystems 102. The risk profile is indicative of impact and liability of the one or more AI component subsystems 102. For example, the risk profile includes projects classified as high risk such as client restricted projects and external customer facing interfaces; projects with a high impact assessment such as automated decision-making and execution systems without human-in-the-loop oversight; projects with significant liability such as contractual engagements; and client-defined high-risk projects demanding an intervention.

In this exemplary embodiment of the present invention, the industry profile is indicative of sectors where AI-driven automation directly impacts human, financial, or societal well-being. In various exemplary embodiments, the industry profile associated with the AI system 100 includes healthcare systems operating without human supervision, financial services or insurance systems executing automated transactions without human verification, manufacturing automation systems controlling physical processes without human intervention, education systems deploying automated assessment or decisioning, human resource management systems affecting employment decisions, social-impacting systems such as law enforcement or social scoring, any AI system processing personally identifiable information (PII), confidential or sensitive data, or any AI system operating within industries explicitly identified by regulatory bodies as requiring an AI intervention mandate.

In this exemplary embodiment of the present invention, the materiality profile is indicative of a scale, exposure, and criticality of the AI system 100 based on usage and financial impact. The materiality profile includes a project engagement value threshold with associated liability terms, a ratio of potential end-users to directly affected users, a transactional throughput threshold such as a number of transactions per hour or per second, operational uncertainty levels exceeding acceptable safety or reliability limits, and conditions mandating disengagement intervention as per industry or regulatory guidelines.

In an embodiment of the present invention, the system evaluation sub-unit 210 determines whether conditions for execution of the AI operation disengagement engine 104 are met by assessing the risk level and the plurality of profiling features. For example, if an AI component subsystem 102 is classified as high-risk and operates in a regulated industry with a high materiality profile, the system evaluation sub-unit 210 mandates the execution of the AI operation disengagement engine 104 associated with the one or more AI component subsystems 102 to either partially or fully disengage the one or more AI execution and operations. The system evaluation sub-unit 210 mandates the execution of the AI operation disengagement engine 104 in accordance with the received input that includes the SOP and any applicable regulatory or organizational policies. Once the mandate for the provision of the AI operation disengagement engine 104 is established, the system evaluation sub-unit 210 triggers the system configuration sub-unit 212.

In an embodiment of the present invention, the system evaluation sub-unit 210 is configured to extract predetermined failure state associated with the one or more AI component subsystems 102 from the SOP received from the input-output unit 110. The system evaluation sub-unit 210 identifies the predetermined failure states and maps the predetermined failure states to the one or more AI component subsystems 102. The system evaluation sub-unit 210 then identifies the disengagement level of the one or more AI component subsystems 102 based on the mapping and the risk level analysis. The disengagement level includes a partial disengagement or a full disengagement determination of one or more AI operations of the AI component subsystems. For example, the AI system 100 may comprise a chatbot or an Application Programming Interface (API) or an orchestrator or an agent or one or more external agents. The system evaluation sub-unit 210 determines that the chatbot can be subjected to either partial disengagement or full disengagement. Similarly, the system evaluation sub-unit 210 determines partial disengagement or full disengagement for the API, orchestrator, agent, or external agents, depending on the operational context and risk assessment.

In an embodiment of present invention, the system evaluation sub-unit 210 is configured to trigger the system configuration sub-unit 212 after the analysis of the input is completed. The system configuration sub-unit 212 is configured to extract the one or more predefined parameters and the corresponding threshold range related to the AI component subsystem 102 from the SOP. The one or more predefined parameters are indicative of predetermined failure states associated with the one or more AI operations of the one or more AI component subsystems 102. The one or more predefined parameters include, but are not limited to, user feedback and escalations, workload monitoring, accuracy of output, latency, resource utilization, decision-making patterns, and security breaches.

In an embodiment of present invention, the system configuration sub-unit 212 is configured to transmit data associated with the predefined parameters and the corresponding predetermined threshold range to the parameter monitoring sub-unit 216 of the operation monitoring unit 204. The parameter monitoring sub-unit 216 is configured to monitor a parameter value corresponding to each of the one or more predefined parameters and compare the parameter value with the corresponding predetermined threshold range. The parameter monitoring sub-unit 216 further reports a deviation in parameter value beyond the corresponding predetermined threshold range to the system configuration sub-unit 212.

In an embodiment of the present invention, the deviation in the parameter value beyond the corresponding threshold range is monitored using a prompt flow engineering and testing technique. The prompt flow engineering and testing technique enable the parameter monitoring sub-unit 216 to continuously observe the one or more predefined parameters against the corresponding threshold range and to promptly report any instance where the parameter value is beyond the corresponding threshold range.

In another embodiment of the present invention, the deviation in the parameter value beyond the corresponding threshold range is monitored using a Large Language Model (LLM) that acts as a judge. The LLM judge evaluates an output of an AI model (or even its own output) by assessing criteria such as accuracy and relevance. For example, if the LLM judge determines that an AI model associated with the one or more of the AI component subsystems 102 is exhibiting hallucination or generating spurious outputs, then the LLM judge independently evaluates the same output. If the LLM judge produces a response consistent with the AI model, then the parameter monitoring sub-unit 216 compares the confidence scores associated with the AI model and the LLM judge. If the confidence score is determined to be similar, an alert is generated in accordance with the SOP. The parameter monitoring sub-unit 216 ensures an additional layer of validation and risk mitigation by leveraging the LLM judge to detect and respond to anomalous or unreliable behavior of the AI component subsystems 102.

In an embodiment of the present invention, the system configuration sub-unit 212 is communicatively connected to the event-logging sub-unit 218 of the operation monitoring unit 204. The event-logging sub-unit 218 is configured to record operational events associated with the one or more predefined parameters such as user feedback and escalations, workload monitoring, security breaches, or any configuration changes performed by the system administrator via the input-output unit 110. The event-logging sub-unit 218 records event data including the parameter value corresponding to each of the one or more predefined parameters, the deviation in parameter value beyond the corresponding predetermined threshold range, and user interactions. The event-logging sub-unit 218 maintains an event log of the one or more AI operations. Furthermore, the event-logging sub-unit 218 stores the event data and the event logs in a database 218a which is communicatively connected to the memory 108.

In operation, in an embodiment of the present invention, the event-logging sub-unit 218 continuously monitors status and outcomes related to the one or more AI operations, capturing detailed information such as timestamps, parameter values, incident reports, and any detected irregularities within the one or more AI component subsystem 102. Each event entry is indexed and categorized to facilitate efficient retrieval and analysis. The database 218a ensures that all logged information is securely stored and readily accessible for subsequent auditing, compliance verification, and post-incident review. Furthermore, the event-logging sub-unit 218 supports traceability and accountability by providing a chronological record of the one or more AI operations and any interventions. The event-logging sub-unit 218 enables the system administrator or the IT support teams to understand a sequence of events leading up to any operational irregularity and accordingly issue the disengagement command via the input-output unit 110. The event-logging sub-unit 218 is utilized for a root cause analysis, a regulatory reporting, and a development of improved risk mitigation strategies.

In an embodiment of the present invention, the event-logging sub-unit 218 sends a report including the event data and the event log to the system configuration sub-unit 212. In another embodiment of the present invention, the event-logging sub-unit 218 sends an alert to the system configuration sub-unit 212, indicating an irregularity in the one or more AI operations associated with the one or more AI component subsystems 102. In yet another embodiment of the present invention, the event-logging sub-unit 218 sends an alert directly to the input-output unit 110 via the notification generation sub-unit 220, indicating an irregularity in the one or more AI operations associated with the one or more AI component subsystems 102.

In an exemplary embodiment of the present invention, the event-logging sub-unit 218 monitors reported incidents, escalations, or feedback submitted by end-users within a production environment. Each reported incident is assigned a priority level such as P0, P1, P2, P3, or P4. The reported incidents classified as P0 to P2 are categorized by the event-logging sub-unit 218 as minor incidents, while the reported incidents classified as P3 or P4 are categorized as major incidents. The event-logging sub-unit 218 generates and transmits a report to the system configuration sub-unit 212 based on the assigned priority of the incident. The report includes comprehensive information such as the end-user who identified an issue, the root cause analysis of the issue, affected users, impacted systems or units, time of occurrence, urgency level, and any relevant error messages. In an exemplary embodiment of the present invention, the system configuration sub-unit 212 assigns the reported incident to an appropriate IT support team in accordance with the SOP. The system configuration sub-unit 212 then activates the notification generation sub-unit 220 to send a notification to the IT support team via the input-output unit 110.

In an embodiment of the present invention, the event-logging sub-unit 218 ensures traceability, regulatory compliance and post-event analysis of decisions related to the selective disengagement of the one or more AI operations. The event-logging sub-unit 218 further archives and analyzes the event data and the event logs generated post the activation of the disengagement process and identifies Digital Forensics and Incident Response (DFIR) actions to facilitate impact assessment. The event-logging sub-unit 218 also invokes crisis and incident response to operationalize response strategies such as regulatory disclosures and reporting affected users due to activation of the disengagement process.

In an embodiment of the present invention, the system configuration sub-unit 212 is communicatively connected to the notification generation sub-unit 220. The notification generation sub-unit 220 is configured to generate either the notification or a recommendation based on the deviation in parameter value beyond the corresponding predetermined threshold range. In another embodiment of the present invention, the notification generation sub-unit 220 is configured to generate either the notification or the recommendation based on an activation signal from one of the system configuration sub-unit 212 and the event-logging sub-unit 218. The notification generation sub-unit 220 sends the notification and the recommendation to the input-output unit 110. In an exemplary embodiment, the notification generation sub-unit 220 is configured to send the notification based on severity level, ranging from informational messages to urgent disengagement alerts. The notification also includes event log and event data for traceability purposes.

In an embodiment of the present invention the system configuration sub-unit 212 receives the parameter value and the deviation in the parameter value beyond the corresponding predetermined threshold range from the parameter monitoring sub-unit 216, the event data and the event log from the event-monitoring sub-unit 218.The system configuration sub-unit 212 determines if the disengagement process is to be initiated based on the identified disengagement level of the one or more AI component subsystems 102 obtained based on the mapping and the risk level analysis, the parameter value identified to be beyond the corresponding predetermined threshold range and the event data and the event log. The system configuration sub-unit 212 transmits disengagement data to the disengagement implementation sub-unit 214 based on the determination of the disengagement process. The disengagement data includes the disengagement level associated with the one or more AI component subsystems 102, active or pending processes, processes scheduled for suspension or termination, and details of alternative data repositories for storage of processed data.

In an embodiment of the present invention, the disengagement implementation sub-unit 214 is configured to receive the disengagement data from the system configuration sub-unit 212 and implement technical mechanisms to ensure that passive functions associated with the one or more AI component subsystems 102 are operational while the impacted AI execution and operations are disabled (partially or fully) based on the disengagement data received from the system configuration sub-unit 212. The disengagement implementation sub-unit 214 triggers a disengagement signal to activate the AI disengagement unit 222 to disengage (either partially or fully) the impacted one or more AI execution and operations of the one or more AI component subsystems 102. In an embodiment of the present invention, the disengagement signal is triggered based on the disengagement data and the disengagement command received from the input-output unit 110, which is transmitted to the AI disengagement unit 222.

In an embodiment of the present invention, the disengagement implementation sub-unit 214 records a disengagement event based on the triggered disengagement signal. The disengagement event is indicative of a change in the operational state of the one or more AI component subsystems 102 from an active mode to one of a disengaged mode and a fallback mode. The active mode indicates a scenario when the one or more AI operations are running normally. The disengaged mode indicates a scenario where the one or more AI operations of the one or more AI component subsystems 102 are temporarily or permanently suspended. The fallback mode indicates a scenario where the one or more AI component subsystems 102 continues to operate but with limited functionality at a reduced capacity. In an embodiment of the present invention, the disengagement implementation sub-unit 214 updates the SOP with contextual data associated with the disengagement event in the SOP. The contextual data includes time and date of occurrence of the disengagement event, impacted AI operations, the disengagement level, and any actions taken as part of fallback or recovery process.

In an embodiment of the present invention, the AI disengagement unit 222 is configured to receive the disengagement signal from the disengagement implementation sub-unit 214 and identifies the one or more AI operations of the one or more AI component subsystems 102 for selective disengagement. The AI disengagement unit 222 selectively disengages the identified one or more AI execution and operations by switching the one or more AI component subsystems 102 into one of the disengaged mode and the fallback mode. When the AI disengagement unit 222 is activated, the notification such as "the disengagement operation is enabled" is generated and sent to the input-output unit 110 by the disengagement implementation sub-unit 214.

In an embodiment of the present invention, the AI disengagement unit 222 executes selective disengagement of the one or more AI execution and operations of the one or more AI component subsystem in accordance with the disengagement command received from the input-output unit 110. The AI disengagement unit 222 switches the operational state of the one or more AI component subsystems 102 into one of the disengaged mode and the fallback mode which includes partial or full disengagement scenarios of the one or more AI operations. In an example, the disengaged mode of the one or more AI component subsystems 102 includes, but is not limited to, temporarily halting execution of AI models, disabling data flow from the interface unit, isolating hardware resources allocated to the one or more AI component subsystems 102, deactivating one or more AI instances, disengaging API and any integration to AI model, deactivating a user-interface, restricting end-user access or fully disengaging the one or more AI component subsystems 102. In another example, the fallback mode includes maintaining essential system operations by reverting to pre-defined, deterministic processes or rule-based logic thereby ensuring that the one or more AI operations are critical to the functioning of the one or more AI component subsystems 102 continue to operate at a reduced capacity without reliance on the one or more AI operations that are disengaged. In the fallback mode, the AI disengagement unit 222 disables advanced AI-driven features, restricts access to sensitive functionalities, and prioritizes core services to minimize disruption. The AI disengagement unit 222 also activates alternative workflows such as manual overrides, static response templates, or legacy algorithms in the fallback mode to provide continuity of service and uphold safety, compliance, and reliability standards until normal AI operations can be safely restored.

In an embodiment of the present invention, the AI disengagement unit 222 securely stores sensitive data as well as data associated with active or pending one or more AI operations of the one or more AI component subsystems 102 in a back-end database (not shown). In an embodiment of the present invention, the AI disengagement unit 222 categorizes and tags the stored data according to the nature of an event, specific AI operations affected, and associated risk or compliance requirements. The structured approach to data management ensures that, in the event of the crisis or any operational irregularity, all critical information is readily accessible for investigation, review, or forensic analysis.

In another embodiment of the present invention, the AI operation disengagement engine 104 orchestrates a synchronized disengagement process that spans the one or more AI component subsystems 102. Specifically, the AI operation disengagement engine 104 enables a coordinated disengagement of the one or more AI component subsystems 102 in an event of catastrophic failures such as widespread security breach, a critical infrastructure malfunction, a systemic data corruption or regulatory mandates.

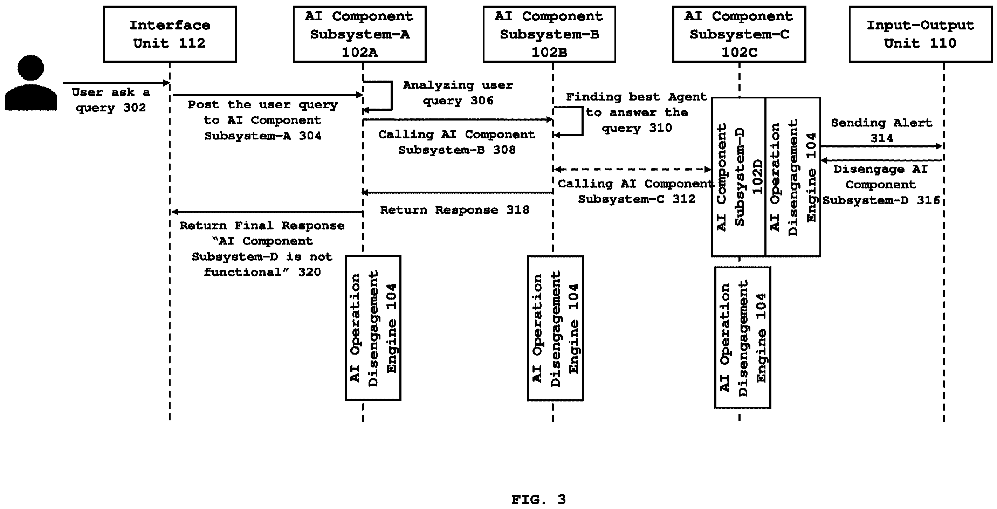

Figs.3 to 6 illustrate signal flow diagrams depicting interactions between the one or more AI components subsystems 102 which is operatively or communicatively connected to the AI disengagement engine 104, the input-output unit 110, and the interface unit 112, in accordance with various exemplary embodiments of the present invention.

Referring to Fig. 3, at step 302, a user initiates a process by submitting a query to the AI system 100, which is transmitted to the AI system 100 via the interface unit 112. The interface unit 112 may be implemented as a graphical user interface (GUI), a command-line interface (CLI), an application programming interface (API), or a natural language input channel.

At step 304, the interface unit 112 forwards the query to the corresponding AI component subsystem-A 102A. The AI component subsystem-A 102A is a virtual assistant having advanced NLP capabilities to process the query expressed in natural language.

At step 306, the AI component subsystem-A 102A assesses a nature and complexity of the query and determines whether the AI component subsystem-A 102A has required functionality and resources to generate a response. If the AI component subsystem-A 102A is unable to fully resolve the query, the AI component subsystem-A 102A delegates the query to another subsystem thereby ensuring that the query is handled efficiently and without unnecessary delay. In the illustrated embodiment, the AI component subsystem-A 102A delegates the query to the AI component subsystem-B 102B as the AI component subsystem-A 102A is unable to fully resolve the query.

At step 308, the AI component subsystem-A 102A calls for the AI component subsystem-B 102B. The AI component subsystem-B 102B is an orchestrator layer for identifying and assigning a subsystem to process the query, as depicted in step 310.

At step 312, the AI component subsystem-B 102B determines that the AI component subsystem-C 102C is capable of handling the query. The AI component subsystem-B 102B initiates a call to the AI component subsystem-D 102D which serves as an API interface associated with the AI component subsystem-C 102C. The AI component subsystem-D 102D is responsible for enabling communication and data exchange between the AI component subsystem-B and the AI component subsystem-C 102C. As depicted in FIG. 3, the AI component subsystem-D 102D exhibits irregular operational behavior indicative of a potential malfunction. The AI operation disengagement engine 104, as described in conjunction with FIGs. 1 and 2, which is operatively and communicatively coupled with the AI component subsystem-D 102D is triggered. The AI operation disengagement engine 104 analyzes the input and monitors the one or more predefined parameters associated with the one or more AI operations of the AI component subsystem-D 102D. The AI operation disengagement engine 104 compares the parameter value corresponding to each of the one or more predefined parameters and compares the parameter value with the corresponding predetermined threshold range. The AI operation disengagement engine 104 identifies the deviation in the parameter value beyond the corresponding predetermined threshold range.

At step 314, the AI operation disengagement engine 104 generates the notification indicating the potential malfunction and transmits the notification to the input-output unit 110. The input-output unit 110 serves as the primary interface for the system administrator or any other support personnel, receives the notification.

At step 316, the input-output unit 110 sends the disengagement command for disengaging the AI component subsystem-D 102D, in response to the notification received from the AI operation disengagement engine 104. The disengagement command instructs the AI operation disengagement engine 104 to selectively disengage the one or more AI operations of the AI component subsystem-D 102D thereby isolating malfunctioned component and preventing further propagation of fault within the AI system 100.

At step 318, the AI component subsystem-B 102B returns response to the AI component subsystem-A 102A, indicating an operational status and disengagement of the one or more AI operations of the AI component subsystem-D 102D.

Lastly, at step 320, the AI component subsystem-A 102A communicates a final response to the user via the interface unit 112, stating that "AI component subsystem-D is not functional". The communication of the final response ensures that the user is promptly informed of the operational status of the AI system 100 and any limitations in service availability resulting from the disengagement of any subsystem.

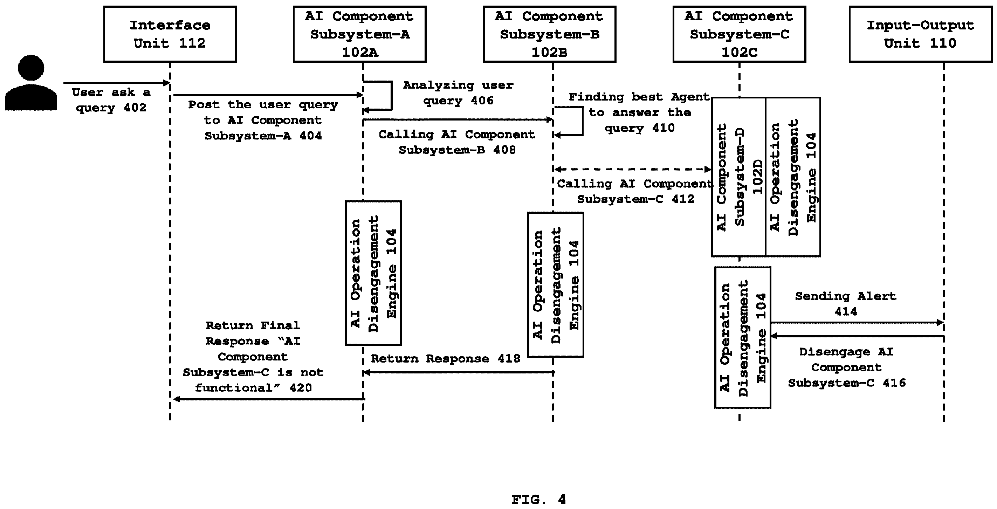

Referring to Fig.4, at step 402, a user initiates an interaction by submitting a query to the AI system 100, which is transmitted via the interface unit 112.

At step 404, the interface unit 112 forwards the query to the AI component subsystem-A 102A. The AI component subsystem-A 102A is a virtual assistant having advanced NLP capabilities enabling the AI component subsystem-A 102A to interpret and process the query expressed in the natural language.

At step 406, the AI component subsystem-A 102A assesses the nature of the query and determines if the AI component subsystem-A 102A has required functionality and resources to generate a response. In the illustrated embodiment, the AI component subsystem-A 102A delegates the query to the AI component subsystem-B 102B as the AI component subsystem-A 102A is unable to fully resolve the query.

At step 408, the AI component subsystem-A 102A initiates a call to the AI component subsystem-B 102B. The AI component subsystem-B 102B is an orchestrator layer that determines and assigns a subsystem to process the query, as depicted in step 410.

At step 412, the AI component subsystem-B 102B determines that the AI component subsystem-C 102C is capable of handling the query. Consequently, the AI component subsystem-B 102B calls the AI component subsystem-D 102D that operates as an API associated with the AI component subsystem-C 102C. The AI component subsystem-D 102D is responsible for facilitating communication and data exchange between the AI component subsystem-B 102B and the AI component subsystem-C 102C. As depicted in FIG. 4, the AI component subsystem-C 102C is exhibiting irregular operational behavior to the AI component subsystem-D 102D, indicating the potential malfunction within the AI component subsystem-C 102C.

At step 414, the AI operation disengagement engine 104 operatively and communicatively coupled with the AI component subsystem-C 102C is triggered. The AI operation disengagement engine 104 monitors the one or more predefined parameters associated with the one or more AI operations of the AI component subsystem-C 102C. The AI operation disengagement engine 104 compares the parameter value corresponding to each of the one or more predefined parameters and compares the parameter value with the corresponding predetermined threshold range. The AI operation disengagement engine 104 identified the deviation in the parameter value beyond the corresponding predetermined threshold range. Upon detecting the deviation, the AI operation disengagement engine 104 generates the notification and transmits the notification to the input-output unit 110. The input-output unit 110, serves as the primary interface for the system administrator or any other support personnel, receives the notification.

At step 416, the input-output unit 110 sends the disengagement command for selective disengagement of the AI component subsystem-C 102C, in response to the notification received from the AI operation disengagement engine 104. At step 418, the AI component subsystem-B 102B returns a response to the AI component subsystem-A 102A indicating the operational status and disengagement of the AI component subsystem-C 102C.

Lastly, at step 420, the AI component subsystem-A 102A communicates a final response to the user via the interface unit 112, explicitly stating that "AI component subsystem-C is not functional" to ensure that the user is promptly informed of the operational status and any limitations in service availability resulting from the disengagement of the AI component subsystem-C 102C.

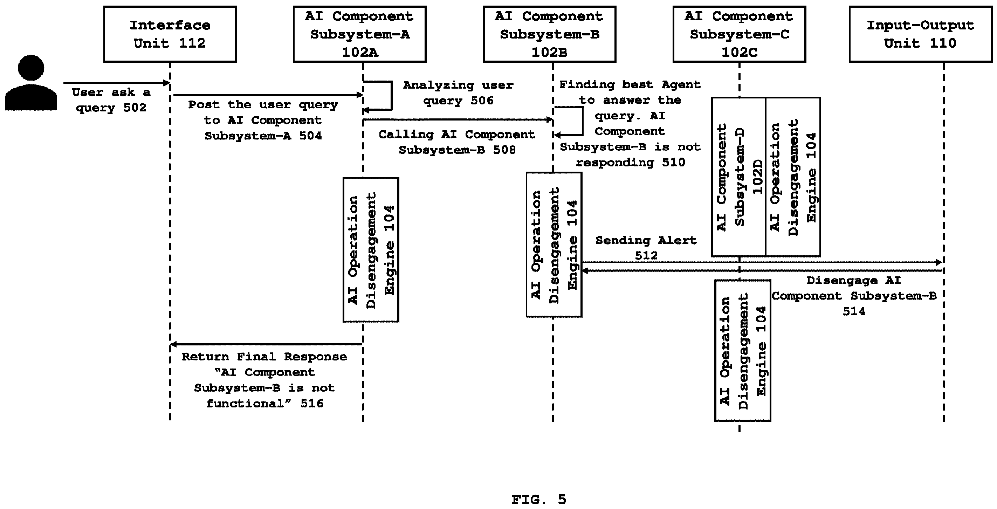

Referring to Fig.5, at step 502, a user initiates a process by submitting a query to the AI system 100, which is transmitted through the interface unit 112 that serves as a primary communication channel between the user and the AI system 100.

At step 504, the interface unit 112 posts the query to the AI component subsystem-A 102A. The AI component subsystem-A 102A is a virtual assistant equipped with the advanced NLP capabilities to interpret and process the query expressed in natural language.

At step 506, the AI component subsystem-A 102A assesses nature and complexity of the query. The AI component subsystem-A 102A determines whether the AI component subsystem-A 102A has required functionality to generate a response. In the illustrated embodiment, the AI component subsystem-A 102A delegates the query to the AI component subsystem-B 102B as the AI component subsystem-A 102A is unable to independently resolve the query.

At step 508, the AI component subsystem-A 102A initiates a call to the AI component subsystem-B 102B. The AI component subsystem-B 102B is an orchestrator layer, configured to determine and assign a subsystem to process the query, as depicted in step 510. As depicted in FIG. 5, the AI component subsystem-B 102B fails to respond, indicating a potential malfunction.

At step 512, the AI operation disengagement engine 104 operatively and communicatively coupled to the AI component subsystem-B 102B is triggered. The AI operation disengagement engine 104 monitors the one or more predefined parameters associated with the one or more AI operations of the AI component subsystem-B 102B. The AI operation disengagement engine 104 compares the parameter value corresponding to each of the one or more predefined parameters and compares the parameter value with the corresponding predetermined threshold range. The AI operation disengagement engine 104 identifies the deviation in the parameter value beyond the corresponding predetermined threshold range. Upon detecting the deviation, the AI operation disengagement engine 104 generates the notification and transmits the notification to the input-output unit 110. The input-output unit 110 functions as the primary interface for the system administrator or any other support personnel, receives the notification.

At step 514, the input-output unit 110 issues the disengagement command for selectively disengaging the one or more AI operations associated with the AI component subsystem-B 102B, in response to the notification received from the AI operation disengagement engine 104.

At step 516, the AI component subsystem-A 102A returns a final response "AI component subsystem-B is not functional" to the user via the interface unit 112.

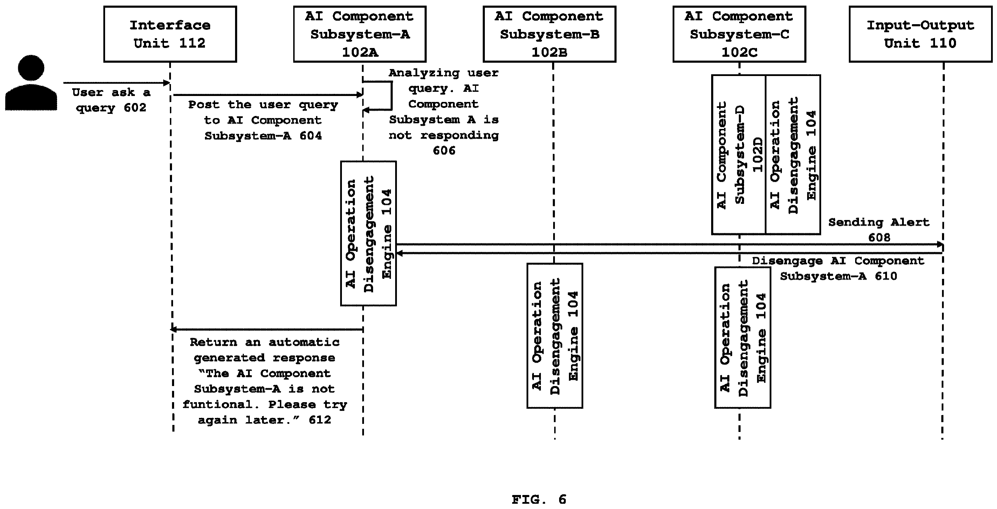

Referring to Fig.6, at step 602, a user initiates a process by submitting a query to the AI system 100, which is transmitted via the interface unit 112 which serves as the primary communication channel between the user and the AI system 100.

At step 604, the interface unit 112 posts the query to the AI component subsystem-A 102A. The AI component subsystem-A 102A is a virtual assistant having NLP capabilities.

At step 606, the AI component subsystem-A 102A attempts to assess nature of the received query and determines whether the AI component subsystem-A 102A possesses requisite functionality and resources to generate a response. During the assessment, the AI component subsystem-A 102A evaluates the complexity of the query, the availability of necessary computational resources, and the operational status of internal modules. As depicted in FIG. 6, the AI component subsystem-A 102A fails to respond, indicating a malfunction, operational issue, or an internal failure state.

At step 608, the AI operation disengagement engine 104, which is operatively and communicatively associated with the AI component subsystem-A 102A, is triggered. The AI operation disengagement engine 104 monitors the one or more predefined parameters associated with the one or more AI operations of the AI component subsystem-A 102A. The AI operation disengagement engine 104 compares the parameter value corresponding to each of the one or more predefined parameters and compares the parameter value with the corresponding predetermined threshold range. The AI operation disengagement engine 104 is further configured to report the deviation in the parameter value beyond the corresponding predetermined threshold range. Upon detecting the deviation, the AI operation disengagement engine 104 generates the notification and transmits the notification to the input-output unit 110. The input-output unit 110 functions as a primary interface for system administrator, IT support personnel, or other authorized operators, receives the notification from the AI operation disengagement engine 104.

At step 610, the input-output unit 110 issues the disengagement command for the selective disengagement of the AI component subsystem-A 102A.

At step 612, the AI component subsystem-A 102A, upon receipt of the disengagement command, provides a fallback message or returns an automatically generated response to the user via the interface unit 112. The fallback message may state, for example, "The AI component subsystem-A is not functional. Please try again later" to ensure that the user is promptly informed of the operational status of the AI system 100.

Advantageously, in various embodiments of the present invention, the present invention provides a robust mechanism for selective disengagement of the one or more AI component subsystems 102 within the AI system 100. By enabling targeted intervention and provision for fallback responses, the AI system 100 minimizes disruption to end-users and maintains operational continuity wherever possible. Furthermore, the integration of the AI operation disengagement engine 104 with real-time monitoring and notification capabilities ensures that anomalies are detected and addressed in a timely manner, thereby supporting enhanced organizational resilience, risk mitigation, and compliance with regulatory requirements. The present invention also facilitates documenting the disengagement event and associated contextual data which can be utilized for post-incident analysis and regulatory reporting. The present invention provides for reduction in operational costs and loss of productivity by enabling targeted disengagement which does not necessitate shutting down the AI system 100 entirely.

It will be appreciated by those skilled in the art that the functionalities described for the various sub-units may be implemented interchangeably in different embodiments of the present invention. In other words, the specific functions assigned to each sub-unit are not limited to the particular configurations described herein, and alternative arrangements or combinations of these functionalities may be adopted without departing from the scope of the invention.

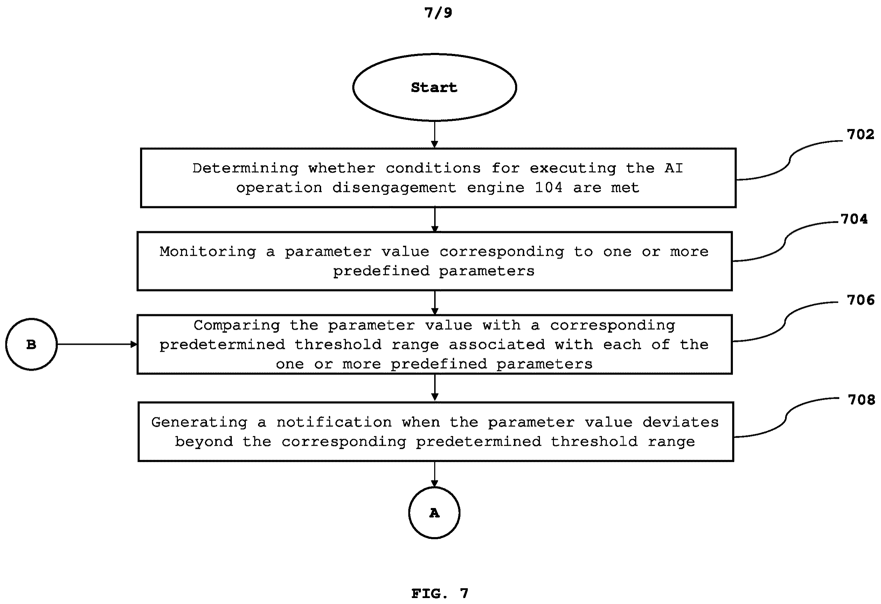

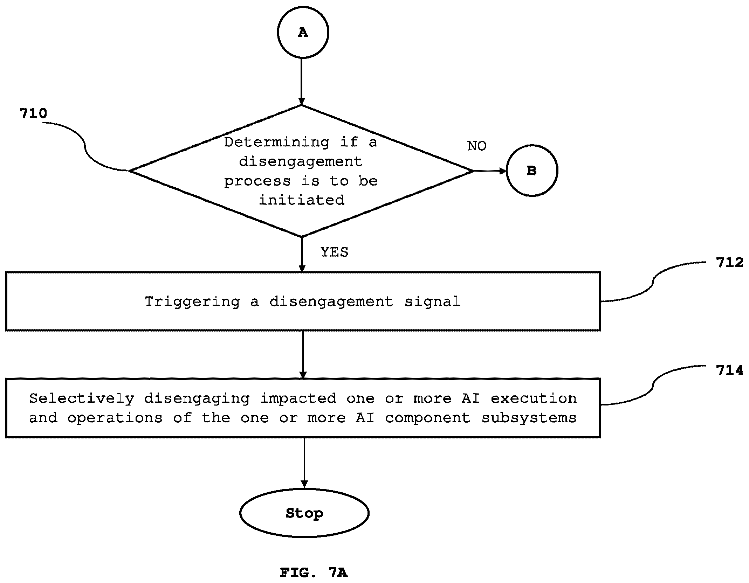

Figs. 7 and 7A illustrate a flowchart depicting a method for selective disengagement of one or more AI execution and operations of an AI system 100, in accordance with various embodiments of the present invention. The method is executed by an AI operation disengagement engine 104 communicatively coupled to one or more AI component subsystems 102 of the AI system 100. The method is implemented by the processor 106 of the AI system 100 that executes program instructions stored in the memory 108 of the AI system 100.

At step 702, it is determined whether the conditions for execution of the AI operation disengagement engine 104 are met. In an embodiment of the present invention, it is determined whether conditions for execution of the AI operation disengagement engine 104 are met by assessing the risk level and the plurality of profiling features, as mentioned in conjunction with FIG. 1. For example, if an AI component subsystem 102 is classified as high-risk and operates in a regulated industry with a high materiality profile, the execution of the AI operation disengagement engine 104 associated with the one or more AI component subsystems 102 to either partially or fully disengage the one or more AI execution and operations is mandated. Execution of the AI operation disengagement engine 104 is mandated in accordance with the received input that includes the SOP and any applicable regulatory or organizational policies.

At step 704, a parameter value corresponding to one or more predefined parameters is monitored. In an embodiment of the present invention, the one or more predefined parameters and a corresponding predetermined threshold range is extracted from a SOP document received as an input from an input-output unit 110. The one or more predefined parameters are indicative of predetermined failure states associated with the one or more AI execution and operations of the one or more AI component subsystems 102 in the AI system 100 and are specific to the one or more AI component subsystems 102. In an exemplary embodiment of the present invention, the one or more predefined parameters include user feedback and escalations, workload monitoring, accuracy of output, latency, resource utilization, and security breaches associated with the one or more AI component subsystems 102. The parameter value corresponding to each of the one or more predefined parameters is received and monitored.

At step 706, the parameter value of each of the one or more predefined parameters is compared with the corresponding predetermined threshold range. In an embodiment of the present invention, a deviation in the parameter value beyond the corresponding predetermined threshold range is reported. In an embodiment of the present invention, the deviation in the parameter value beyond the corresponding threshold range is monitored using a prompt flow engineering and testing technique. The prompt flow engineering and testing technique enable the one or more predefined parameters to be continuously observed against the corresponding threshold range and to promptly report any instance where the parameter value is beyond the corresponding threshold range.

In another embodiment of the present invention, the deviation in the parameter value beyond the corresponding threshold range is monitored using a Large Language Model (LLM) that acts as a judge. The LLM judge evaluates an output of an AI model (or even its own output) by assessing criteria such as accuracy and relevance. For example, if the LLM judge determines that an AI model associated with the one or more of the AI component subsystems 102 is exhibiting hallucination or generating spurious outputs, then the LLM judge independently evaluates the same output. If the LLM judge produces a response consistent with the AI model, then the confidence scores associated with the AI model and the LLM judge are compared. If the confidence score is determined to be similar, an alert is generated in accordance with the SOP.

At step 708, a notification is generated when the parameter value deviates beyond the corresponding predetermined threshold range. In an embodiment of the present invention, at least one of the notification and a recommendation based on the deviation in the parameter value beyond the corresponding predetermined threshold range is generated. Prior to the step of generating the notification, event data including the parameter value corresponding to each of the one or more predefined parameters and the deviation in the parameter value beyond the corresponding predetermined threshold range are recorded. An event log of the one or more AI operations is also maintained. In an embodiment of the present invention, based on a report including the event data and the event log, an activation signal is triggered by the system configuration sub-unit 212. In another embodiment of the present invention, the activation signal can also be triggered by the event-logging sub-unit 218 based on the event data and the event log. The generated notification and/or the generated recommendation is sent to the input-output unit 110 based on the activation signal which is received from one of the system configuration sub-unit 212 and the event-logging sub-unit 218.

At step 708, it is determined whether disengagement process is to be initiated. In an embodiment of the present invention, the initiation of the disengagement process is determined based on the disengagement level and the risk analysis associated with the one or more AI component subsystems 102 obtained based on an analysis of the input received from the input-output unit 110, the deviation in the parameter value, the event data, and the event log to generate a disengagement data. The risk analysis is based on evaluating a risk profile, an industry profile, and a materiality profile of the AI system 100, as mentioned in conjunction with FIG. 1. The disengagement data includes the impacted one or more AI execution and operations of the one or more AI component subsystems 102, the disengagement level associated with the one or more AI component subsystems 102, active or pending AI operations, processes scheduled for suspension or termination, recovery process to be implemented, and details of alternative data repositories for storage of processed data.

At step 710, in the event it is determined that the disengagement process is to be initiated, then at step 712, a disengagement signal is triggered. In an embodiment of the present invention, the disengagement signal is triggered based on the disengagement data and a disengagement command triggered in response to the generated notification. Further, a disengagement event is recorded based on the triggered disengagement signal. The disengagement event is indicative of a change in an operational state of the one or more AI component subsystems 102 from an active mode to one of a disengaged mode and a fallback mode. The disengaged mode indicates a scenario where the one or more AI operations of the one or more AI component subsystems 102 are temporarily or permanently suspended, and the fallback mode indicates a scenario where the one or more AI component subsystems 102 continue to operate but with limited functionality at a reduced capacity. Further, the SOP document is updated with contextual data associated with the disengagement event. The contextual data include time and date of occurrence of the disengagement event, the impacted AI operations, the disengagement level, and other actions taken as part of fallback or the recovery process. In another embodiment of the present invention, in the event it is determined that the disengagement process is not to be initiated at step 710, then step 706 is executed.

At step 714, the impacted one or more AI operations of the one or more AI component subsystems 102 are selectively disengaged based on the disengagement signal. In an embodiment of the present invention, the selective disengagement includes fully or partially disables the impacted one or more AI execution and operations of the one or more AI component subsystems 102. The selective disengagement of the impacted one or more AI operations is implemented by an AI disengagement unit 222 of the AI operation disengagement engine 104. The impacted one or more AI execution and operations of the one or more AI component subsystems 102 are identified by the AI disengagement unit 222 based on the disengagement signal. The identified impacted one or more AI execution and operations are selectively disengaged by the AI disengagement unit 222 by switching the one or more AI component subsystems 102 into one of the disengaged mode and the fallback mode. The disengaged mode of the one or more AI component subsystems 102 include temporarily halting execution of AI models, disabling data flow from an interface unit, isolating hardware resources allocated to the one or more AI component subsystems 102, deactivating one or more AI instances, disengaging API and any integration to AI model, deactivating a user-interface, restricting end-user access or fully disengaging the one or more AI component subsystems 102. The fallback mode includes disabling advanced AI-driven features, restricting access to sensitive functionalities, and prioritizing core services to minimize disruption, activating alternative workflows such as manual overrides, static response templates, or legacy algorithms.

It will be appreciated by those skilled in the art that the steps described in the method for selective disengagement of one or more AI operations, as set out above, may be performed in any suitable order and are not limited to the precise sequence disclosed herein. The method may be adapted or modified in accordance with specific operational requirements, system configurations, or regulatory obligations, without departing from the scope of the invention. As would be apparent to a person in the art, various working modifications may be made to the method in order to implement the inventive concept as taught herein.

Advantageously, in accordance with various embodiments of the present invention, the present invention provides for a system and a method that restricts damage caused by malfunction of an AI component subsystem among the one or more AI component subsystems 102 of the AI system 100. The present invention provides a system and a method that limits exposure of an organization to a runaway AI system. The present invention provides a system and a method that adheres to regulatory requirements and security compliances. The present invention provides traceability and accountability of the one or more AI operations of the AI system 100. The present invention provides a system and a method that can be applied across industrial operations such as Development Operations (DevOps), security operations, and network and platform operations. The present invention provides a system and a method that enables humans to intervene, stop, or disengage the one or more operations associated with AI system 100 when the AI system 100 demonstrates undesirable behavior.

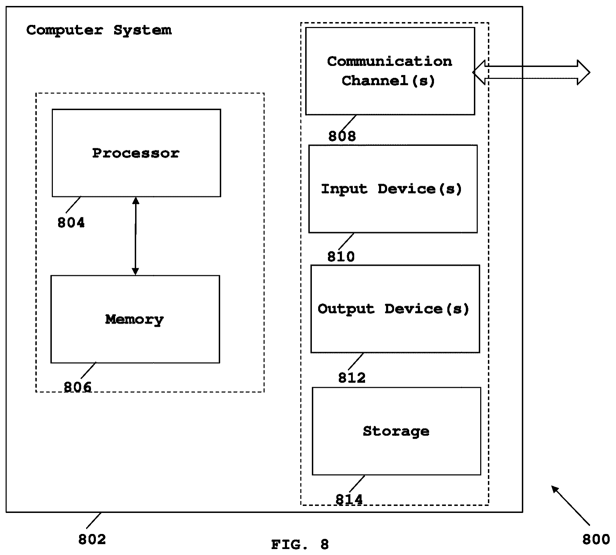

FIG. 8 illustrates an exemplary computer system 802 in which various embodiments of the present invention may be implemented. The computer system 802 comprises a processor 804 and a memory 806. The processor 804 executes program instructions and is a real processor. The computer system 802 is not intended to suggest any limitation as to scope of use or functionality of described embodiments. For example, the computer system 802 may include, but not limited to, a programmed microprocessor, a micro-controller, a peripheral integrated circuit element, and other devices or arrangements of devices that are capable of implementing the steps that constitute the method of the present invention. In an embodiment of the present invention, the memory 806 may store software for implementing various embodiments of the present invention. The computer system 802 may have additional components. For example, the computer system 802 includes one or more communication channels 808, one or more input devices 810, one or more output devices 812, and storage 814. An interconnection mechanism (not shown) such as a bus, controller, or network interconnects the components of the computer system 802. In various embodiments of the present invention, operating system software (not shown) provides an operating environment for various software executing in the computer system 802 and manages different functionalities of the components of the computer system 802.

The communication channel(s) 808 allows communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, Bluetooth, or other transmission media.

The input device(s) 810 may include, but not limited to, a keyboard, mouse, pen, joystick, trackball, a voice device, a scanning device, touch screen or any another device that is capable of providing input to the computer system 802. In an embodiment of the present invention, the input device(s) 810 may be a sound card or similar device that accepts audio input in analog or digital form. The output device(s) 812 may include, but not limited to, a user interface on CRT or LCD, printer, speaker, CD/DVD writer, or any other device that provides output from the computer system 802.

The storage 814 may include, but not limited to, magnetic disks, magnetic tapes, CD-ROMs, CD-RWs, DVDs, flash drives or any other medium which can be used to store information and can be accessed by the computer system 802. In various embodiments of the present invention, the storage 814 contains program instructions for implementing the described embodiments.

The present invention may suitably be embodied as a computer program product for use with the computer system 802. The method described herein is typically implemented as a computer program product, comprising a set of program instructions which is executed by the computer system 802 or any other similar device. The set of program instructions may be a series of computer readable codes stored on a tangible medium, such as a computer readable storage medium (storage 814), for example, diskette, CD-ROM, ROM, flash drives or hard disk, or transmittable to the computer system 802, via a modem or other interface device, over either a tangible medium, including but not limited to optical or analogue communications channel(s) 808. The implementation of the invention as a computer program product may be in an intangible form using wireless techniques, including, but not limited to microwave, infrared, Bluetooth, or other transmission techniques. These instructions can be preloaded into a system or recorded on a storage medium such as a CD-ROM or made available for downloading over a network such as the internet or a mobile telephone network. The series of computer-readable instructions may embody all or part of the functionality previously described herein.

The present invention may be implemented in numerous ways including as a system, a method, or a computer program product such as a computer readable storage medium or a computer network wherein programming instructions are communicated from a remote location.

While the exemplary embodiments of the present invention are described and illustrated herein, it will be appreciated that they are merely illustrative. It will be understood by those skilled in the art that various modifications in form and detail may be made therein without departing from or affecting the scope of the invention.

## Claims

1. An Artificial Intelligence (AI) operation disengagement engine (104) for selective disengagement of one or more AI execution and operations of an AI system (100), the AI operation disengagement engine (104) comprises:
an operation monitoring unit (204) configured to:
monitor a parameter value corresponding to each of one or more predefined parameters, the one or more predefined parameters are indicative of predetermined failure states associated with the one or more AI execution and operations of one or more AI component subsystems (102) in the AI system (100), wherein the AI operation disengagement engine (104) is communicatively coupled to the one or more AI component subsystems (102) and executed by a processor (106) of the AI system (100) that executes program instructions stored in a memory (108) of the AI system (100);
compare the parameter value with a corresponding predetermined threshold range associated with each of the one or more predefined parameters; and
report one or more of a deviation in the monitored parameter value beyond the corresponding predetermined threshold range, an event data, and an event log associated with the one or more AI execution and operations to a functional resilience unit (202);
and
the functional resilience unit (202) is communicatively connected to the operation monitoring unit (204), wherein the functional resilience unit (202) is configured to:
generate a notification when the parameter value deviates beyond the corresponding predetermined threshold range;
determine if a disengagement process is to be initiated based on one or more of a disengagement level and a risk analysis associated with the one or more AI component subsystems (102) obtained based on an analysis of an input received from an input-output unit (110), the deviation in the monitored parameter value, the event data and the event log to generate a disengagement data; and
transmit a disengagement signal to an AI disengagement unit (222) based on the disengagement data and a disengagement command triggered in response to the generated notification; and
the AI disengagement unit (222) is communicatively connected to the functional resilience unit (202), wherein the AI disengagement unit (222) is configured to selectively disengage impacted one or more AI execution and operations based on the disengagement signal, wherein the selective disengagement includes fully or partially disabling the impacted one or more AI execution and operations of the one or more AI component subsystems (102).

2. The AI operation disengagement engine (104) as claimed in claim 1, wherein the functional resilience unit (202) comprises a system configuration sub-unit (212) configured to extract the one or more predefined parameters and the corresponding predetermined threshold range related to the one or more AI component subsystems (102) from a standard operating procedure document received as the input specific to the one or more AI component subsystems (102), and wherein the one or more predefined parameters include user feedback and escalations, workload monitoring, accuracy of output, latency, resource utilization, and security breaches associated with the one or more AI component subsystems (102).

3. The AI operation disengagement engine (104) as claimed in claim 1, wherein the functional resilience unit (202) comprises a system evaluation sub-unit (210) configured to receive a standard operating procedure document as the input specific to the one or more AI component subsystems (102) to perform a risk analysis of the one or more AI component subsystems (102) to determine a risk level of the one or more AI component subsystems (102), the risk analysis is based on evaluation of a plurality of profiling features including a risk profile, an industry profile, and a materiality profile of the AI system, determine the disengagement level associated with the one or more AI component subsystems (102), and transmit data associated with the risk analysis and the disengagement level to a system configuration sub-unit (212) of the functional resilience unit (202), and wherein the system evaluation sub-unit (210) determines whether conditions for execution of the AI operation disengagement engine (104) are met by assessing the risk level and the plurality of profiling features.

4. The AI operation disengagement engine (104) as claimed in claim 2, wherein the system configuration sub-unit (212) configured to transmit the one or more predefined parameters and the corresponding predetermined threshold range to a parameter monitoring sub-unit (216) of the operation monitoring unit (204), the parameter monitoring sub-unit (216) is configured to monitor and compare the parameter value with the corresponding predetermined threshold range and report the deviation in the monitored parameter value beyond the corresponding predetermined threshold range to the system configuration sub-unit (212).

5. The AI operation disengagement engine (104) as claimed in claim 4, wherein the system configuration sub-unit (212) is communicatively connected to an event-logging sub-unit (218) of the operation monitoring unit (204), the event-logging sub-unit (218) records the event data including the monitored parameter value corresponding to each of the one or more predefined parameters and the deviation in parameter value beyond the corresponding predetermined threshold range, maintain the event log of the one or more AI operations, and send a report including the event data and the event log to the system configuration sub-unit (212).

6. The AI operation disengagement engine (104) as claimed in claim 5, wherein the system configuration sub-unit (212) is communicatively connected to a notification generation sub-unit (220) of the operation monitoring unit (204), the notification generation sub-unit (220) is configured to generate at least one of the notification and a recommendation based on the deviation in parameter value beyond the corresponding predetermined threshold range and an activation signal received from one of the system configuration sub-unit (212) and the event-logging sub-unit (218), and send at least one of the generated notification and the generated recommendation to the input-output unit (110).

7. The AI operation disengagement engine (104) as claimed in claim 2, wherein the functional resilience unit (202) comprises a disengagement implementation sub-unit (214) configured to:
receive the disengagement data from the system configuration sub-unit (212), the disengagement data includes one or more of the impacted one or more AI execution and operations of the one or more AI component subsystems (102), the disengagement level associated with the one or more AI component subsystems (102), active or pending AI operations, processes scheduled for suspension or termination, recovery process to be implemented, and details of alternative data repositories for storage of processed data;
trigger the disengagement signal based on the disengagement data and the disengagement command; and
record a disengagement event based on the triggered disengagement signal, the disengagement event is indicative of a change in an operational state of the one or more AI component subsystems (102) from an active mode to one of a disengaged mode and a fallback mode, and wherein the disengaged mode indicates a scenario where the one or more AI operations of the one or more AI component subsystems (102) are temporarily or permanently suspended, and the fallback mode is indicative of a scenario where the one or more AI component subsystems (102) continue to operate but with limited functionality at a reduced capacity; and
update the standard operating procedure document with contextual data associated with the disengagement event, the contextual data includes time and date of occurrence of the disengagement event, the impacted one or more AI operations, the disengagement level, and other actions taken as part of fallback or the recovery process.

8. The AI operation disengagement engine (104) as claimed in claim 7, wherein the AI disengagement unit (222) is configured to:
identify the impacted one or more AI execution and operations of the one or more AI component subsystems (102) based on the disengagement signal received from the disengagement implementation sub-unit (214); and
selectively disengage the identified impacted one or more AI execution and operations by switching the one or more AI component subsystems (102) into one of the disengaged mode and the fallback mode.

9. The AI operation disengagement engine (104) as claimed in claim 8, wherein the disengaged mode include temporarily halting execution of AI models, disabling data flow from an interface unit, isolating hardware resources allocated to the one or more AI component subsystems (102), deactivating one or more AI instances, disengaging Application Programming Interface (API) and any integration to AI model, deactivating a user-interface, restricting end-user access or fully disengaging the one or more AI component subsystems (102), and the fallback mode includes disabling advanced AI-driven features, restricting access to sensitive functionalities, and prioritizing core services to minimize disruption, activating alternative workflows such as manual overrides, static response templates, or legacy algorithms.

10. A method for selective disengagement of one or more AI execution and operations of an AI system (100) executed by an AI operation disengagement engine (104) communicatively coupled to one or more AI component subsystems (102) of the AI system (100), the method is implemented by a processor (106) of the AI system (100) that executes program instructions stored in a memory (108) of the AI system (100), the method comprises:
monitoring a parameter value corresponding to one or more predefined parameters, the one or more predefined parameters are indicative of predetermined failure states associated with the one or more AI execution and operations of the one or more AI component subsystems (102) in the AI system (100); and
comparing the parameter value with a corresponding predetermined threshold range associated with each of the one or more predefined parameters;
reporting one or more of a deviation in the monitored parameter value beyond the corresponding predetermined threshold range, an event data, and an event log associated with the one or more AI execution and operations;
generating a notification when the parameter value deviates beyond the corresponding predetermined threshold range;
determining if a disengagement process is to be initiated based on one or more of a disengagement level and a risk analysis associated with the one or more AI component subsystems (102) obtained based on an analysis of an input received from an input-output unit (110), the deviation in the monitored parameter value, the event data and the event log, to generate a disengagement data;
triggering a disengagement signal based on the disengagement data and a disengagement command triggered in response to the generated notification; and
selectively disengaging impacted one or more AI execution and operations of the one or more AI component subsystems (102) based on the disengagement signal, the selective disengagement includes fully or partially disabling the impacted one or more AI execution and operations of the one or more AI component subsystems (102).

11. The method as claimed in claim 10, the method comprises extracting the one or more predefined parameters and the corresponding predetermined threshold range from a standard operating procedure document received as the input specific to the one or more AI component subsystems (102) prior to the step of monitoring, and wherein the one or more predefined parameters include user feedback and escalations, workload monitoring, accuracy of output, latency, resource utilization, and security breaches associated with the one or more AI component subsystems (102).

12. The method as claimed in claim 10, wherein the method comprises performing a risk analysis of the one or more AI component subsystems (102) to determine a risk level of the one or more AI component subsystems (102), the risk analysis is based on evaluation of a plurality of profiling features including a risk profile, an industry profile, and a materiality profile of the AI system (100); and determining the disengagement level associated with the one or more AI component subsystems (102) and wherein the method comprises determining whether conditions for execution of the AI operation disengagement engine (104) are met by assessing the risk level and the plurality of profiling features prior to the step of monitoring.

13. The method as claimed in claim 10, wherein the method comprises generating a recommendation based on the deviation in parameter value beyond the corresponding predetermined threshold range; generating an activation signal received from one of a system configuration sub-unit (212) and an event-logging sub-unit (218) of the AI operation disengagement engine (104); and sending one of the generated notification and the generated recommendation to an input-output unit (110).

14. The method as claimed in claim 11, wherein the step of triggering the disengagement signal comprises:
receiving the disengagement data including one or more of the impacted one or more AI operations of the one or more AI component subsystems (102), the disengagement level associated with the one or more AI component subsystems (102), active or pending AI operations, processes scheduled for suspension or termination, recovery process to be implemented, and details of alternative data repositories for storage of processed data;
triggering the disengagement signal based on the disengagement data and the disengagement command; and
recording a disengagement event based on the triggered disengagement signal, the disengagement event is indicative of a change in an operational state of the one or more AI component subsystems (102) from an active mode to one of a disengaged mode and a fallback mode, and wherein the disengaged mode indicates a scenario where the one or more AI operations of the one or more AI component subsystems (102) are temporarily or permanently suspended, and the fallback mode indicates a scenario where the one or more AI component subsystems (102) continue to operate but with limited functionality at a reduced capacity; and
updating the standard operating procedure document with contextual data associated with the disengagement event, the contextual data including time and date of occurrence of the disengagement event, the impacted AI operations, the disengagement level, and other actions taken as part of fallback or the recovery process.

15. The method as claimed in claim 14, wherein the step of selectively disengaging the impacted one or more AI execution and operations comprises:
identifying the impacted one or more AI execution and operations of the one or more AI component subsystems (102) based on the disengagement signal; and
selectively disengaging the identified impacted one or more AI executing and operations by switching the one or more AI component subsystems (102) into one of the disengaged mode and the fallback mode, wherein the disengaged mode includes temporarily halting execution of AI models, disabling data flow from an interface unit, isolating hardware resources allocated to the one or more AI component subsystems (102), deactivating one or more AI instances, disengaging API and any integration to AI model, deactivating a user-interface, restricting end-user access or fully disengaging the one or more AI component subsystems (102), and the fallback mode includes disabling advanced AI-driven features, restricting access to sensitive functionalities, and prioritizing core services to minimize disruption, activating alternative workflows such as manual overrides, static response templates, or legacy algorithms.
